# EUROPÄISCHE PATENTSCHRIFT

(11) **EP 4 086 088 B1**
(45) Veröffentlichungstag und Bekanntmachung des Hinweises auf die Patenterteilung: **24.04.2024**
(21) Anmeldenummer: 21208505.4
(22) Anmeldetag: 16.11.2021
(51) Int. Cl.: B60C 11/24, G01M 17/02

(54) **VERFAHREN UND VORRICHTUNG ZUR ÜBERWACHUNG DER PROFILTIEFE ZUMINDEST EINES FAHRZEUGREIFENS**
METHOD AND DEVICE FOR MONITORING THE TREAD DEPTH OF AT LEAST ONE VEHICLE TYRE
PROCÉDÉ ET DISPOSITIF DE SURVEILLANCE DE LA PROFONDEUR DE PROFILÉ D'AU MOINS UN PNEU DE VÉHICULE

(30) Priorität: 07.05.2021 DE 102021204633
(43) Veröffentlichungstag der Anmeldung: 09.11.2022
(73) Patentinhaber: Continental Reifen Deutschland GmbH, 30175 Hannover (DE)
(72) Erfinder: Gläser, Frank, 30165 Hannover (DE); Sahlmüller, Baldo, 30165 Hannover (DE)
(74) Vertreter: Continental Corporation

(56) Entgegenhaltungen:
- EP-A1- 3 753 754
- WO-A1-2020/205703
- FR-A1- 3 090 104
- US-A1- 2017 278 314
- US-A1- 2019 009 618
- US-A1- 2019 270 347

## Beschreibung

Die vorliegende Erfindung bezieht sich auf ein Verfahren zur Überwachung der Profiltiefe zumindest eines Fahrzeugreifens und insbesondere zur Überwachung der Profiltiefe der Fahrzeugreifen einer Fahrzeugflotte. Sie bezieht sich ferner auf ein Computerprogrammprodukt sowie eine Vorrichtung zur Überwachung der Profiltiefe eines Fahrzeugreifens.

Die Überwachung von Profiltiefen von Fahrzeugreifen hat eine wichtige Bedeutung für die Verkehrssicherheit von Fahrzeugen.

Aus der US 2019/270347 A1 ist ein Verfahren bekannt, bei dem die Profiltiefe eines Reifens über seine Laufleistung bestimmt wird, wobei die Laufleistung mittels eines Raddrehzahlsensors ständig ermittelt wird. Ähnliche Verfahren sind auch aus der EP 3 753 754 A1 und der US 2017/278314 A1 bekannt.

Die US 2019/009618 A1 offenbart ein Verfahren, bei dem Reifenprofilmessungen regelmäßig und automatisiert durchgeführt und die Messergebnisse an eine in dem Fahrzeug angeordnete Vorrichtung übertragen werden. Zukünftige Profiltiefen werden abhängig von der gefahrenen Strecke abgeschätzt.

Aus der FR 3 090 104 A1 ist es bekannt, aus einem bekannten anfänglichen Wert für die Profiltiefe aus Messungen der Längssteifigkeit des Reifens auf die weitere Entwicklung zu schließen.

Die WO 2020/205703 A1 offenbart die Vorhersage einer verbleibenden Reifenprofiltiefe anhand einer Wahrscheinlichkeitsfunktion.

Insbesondere in Lkw- und Busflotten wird die Profiltiefe derzeit in regelmäßigen Zeitabständen manuell gemessen. Üblich sind hierbei mehrere Messungen pro Jahr. Mithilfe der Messungen kann sichergestellt werden, dass die Reifen rechtzeitig vor oder spätestens bei Erreichen der gesetzlich vorgeschriebenen Mindestprofiltiefe gewechselt werden können.

Dabei werden jedoch aufgrund der festen Messintervalle häufig wesentlich mehr Messungen vorgenommen, als eigentlich nötig wären, insbesondere bei verhältnismäßig neuen Fahrzeugreifen. Die Durchführung manueller Messungen ist jedoch ein nicht unerheblicher Zeit- und Kostenfaktor.

Es ist daher eine Aufgabe der vorliegenden Erfindung, ein Verfahren zur Überwachung der Profiltiefe zumindest eines Fahrzeugreifens anzugeben, mit dem die Anzahl der nötigen Profiltiefenmessungen in einer Flotte reduziert werden kann, ohne dass das Risiko steigt, dass Reifen mit einer zu geringen Profiltiefe im Straßenverkehr eingesetzt werden. Ferner soll eine Vorrichtung zur Durchführung eines derartigen Verfahrens angegeben werden.

Diese Aufgabe wird gelöst durch den Gegenstand der unabhängigen Ansprüche. Vorteilhafte Ausführungsformen und Weiterbildungen sind Gegenstand der Unteransprüche.

Gemäß einem Aspekt der Erfindung wird ein Verfahren zur Überwachung der Profiltiefe zumindest eines Fahrzeugreifens angegeben, welches das Bestimmen zumindest eines optimalen Messzeitpunktes für die Profiltiefe mittels einer Modellrechnung umfasst, wobei als optimaler Messzeitpunkt ein Zeitpunkt ausgewählt wird, an dem eine mittels des Modells berechnete Überlebenswahrscheinlichkeit des Fahrzeugreifens einen vorgegebenen Wert aufweist.

Das Verfahren hat den Vorteil, dass die Messung der Profiltiefe in regelmäßigen zeitlichen Abständen ersetzt wird durch eine Messung der Profiltiefe zu Zeitpunkten, die abhängig von der Überlebenswahrscheinlichkeit des Fahrzeugreifens gewählt werden. Damit wird insbesondere eine häufige Messung der Profiltiefe bei verhältnismäßig neuen Fahrzeugreifen vermieden.

Der optimale Messzeitpunkt wird dabei mittels einer Modellrechnung bestimmt, wobei insbesondere analytische Modelle wie beispielsweise ein Überlebensmodell oder ein künstliches neuronales Netz zum Einsatz kommen können. Zum Schätzen der Überlebenswahrscheinlichkeit kann beispielsweise ein Kaplan-Meier-Schätzer verwendet werden. Das Modellieren von Überlebenszeiten kann auf einer Cox-Regression basieren.

Das Überleben des Fahrzeugreifens wird hier und im Folgenden dadurch definiert, dass die Profiltiefe des Fahrzeugreifens nicht unterhalb eines vorgegebenen Wertes liegt.

Beispielsweise können zu jedem Messzeitpunkt für den Fahrzeugreifen die Profiltiefe und die Laufleistung bestimmt werden. Der Messzeitpunkt wird so gewählt, dass zu diesem Zeitpunkt mit einer hohen Wahrscheinlichkeit, beispielsweise mit 99,9 %, der Fahrzeugreifen noch intakt ist, d.h. eine ausreichende Profiltiefe aufweist. Dies entsprecht dann einer Überlebenswahrscheinlichkeit des Reifens von 99,9% am gewählten Zeitpunkt.

Das für die Bestimmung des optimalen Messzeitpunktes verwendete Modell basiert insbesondere einerseits auf reifenspezifischen Daten, beispielsweise Reifenmarke, Reifentyp, Größe, Position am Fahrzeug, andererseits auf fahrzeug- und flottenspezifischen Daten, beispielsweise Einsatzort, Art der Verwendung, Flotte, Fahrzeugtyp, sowie ferner auf historischen Profiltiefenmessdaten und Erfahrungswerten bei Flotten. Anhand einer Überlebensfunktion, die dem Modell zu Grunde liegt, kann der Zeitpunkt bzw. die Laufleistung ermittelt werden, zu dem die Überlebenswahrscheinlichkeit des Fahrzeugreifens den vorgegebenen Wert aufweist.

Unter einem Zeitpunkt bzw. einem Messzeitpunkt wird hier und im Folgenden nicht nur ein Datum verstanden, sondern alternativ auch eine Laufleistung des Fahrzeugreifens. Ein Messzeitpunkt kann also zeitlich definiert werden, beispielsweise als Kalenderwoche, aber auch als Maß für die Laufleistung des Fahrzeugreifens. Da Datum und Laufleistung miteinander verknüpft sind, kann, zumindest bei regelmäßig und gleichmäßig genutzten Fahrzeugen, bei Bedarf eine Umrechnung auf einfache Weise erfolgen.

Falls nach einem Ermitteln der Profiltiefe des Fahrzeugreifens am optimalen Messzeitpunkt die Profiltiefe einen vorgegebenen Wert nicht unterschreitet, wird zumindest ein weiterer optimaler Messzeitpunkt ermittelt. Dieser Zeitpunkt kann insbesondere nach denselben Kriterien ermittelt werden wie der vorangegangene optimale Messzeitpunkt, so dass auch als weiterer optimaler Messzeitpunkt ein Zeitpunkt ausgewählt wird, an dem die mittels des Modells berechnete Überlebenswahrscheinlichkeit des Fahrzeugreifens einen vorgegebenen Wert aufweist.

Zur Ermittlung des weiteren Zeitpunktes kann zusätzlich das Ergebnis der gerade erfolgten Profiltiefenmessung herangezogen werden. Falls bereits mehrere Profiltiefenmessungen vorgenommen wurden, können die Ergebnisse aller bisher erfolgen Profiltiefenmessungen zur Ermittlung des weiteren Zeitpunktes herangezogen werden.

Der vorgegebene Wert für die Überlebenswahrscheinlichkeit kann für die Ermittlung des weiteren optimalen Messzeitpunktes derselbe sein wie bei der Ermittlung des ersten optimalen Messzeitpunktes.

Dieses Vorgehen kann bis zum Wechsel des Fahrzeugreifens wiederholt werden. Damit ist sichergestellt, dass mit einer hohen Wahrscheinlichkeit sämtliche Fahrzeugreifen eines Fahrzeugs betriebssicher sind, gleichzeitig jedoch unnötige Profiltiefenmessungen vermieden werden.

Gemäß einer Ausführungsform wird nach einem Ermitteln der Profiltiefe des Fahrzeugreifens am optimalen Messzeitpunkt ein Reifenwechselzeitpunkt ermittelt, falls die Profiltiefe einen vorgegebenen Wert unterschreitet.

Wird beispielsweise bei einer Messung festgestellt, dass der Fahrzeugreifen bereits einen Großteil seiner Laufleistung erreicht hat, beispielsweise dass bereits 80 % der nutzbaren Profiltiefe abgefahren sind, wird für diesen Fahrzeugreifen ein Zeitpunkt extrapoliert, an dem er gewechselt werden soll. Der vorgegebene Wert wird so gewählt, dass die Verkehrssicherheit gewährleistet, ausreichend Zeit für Planung und Durchführung des Reifenwechsels vorhanden ist und ein Auswechseln noch verkehrssicherer Reifen möglichst vermieden wird.

Gemäß einer Ausführungsform erfolgen Messungen der Profiltiefe jeweils für alle Reifen eines Fahrzeugs zum gleichen Zeitpunkt. Dies reduziert den zeitlichen Aufwand für die Profiltiefenmessung.

Als tatsächlicher Messzeitpunkt kann insbesondere der früheste Zeitpunkt verwendet werden, der als optimaler Messzeitpunkt für einen der Reifen eines Fahrzeugs ermittelt wurde. Somit wird die Profiltiefe der Fahrzeugreifen eines Fahrzeugs dann ermittelt, wenn dies für den Fahrzeugreifen mit dem frühesten optimalen Messzeitpunkt vorgesehen wäre.

Gemäß einer Ausführungsform werden ermittelte optimale Messzeitpunkte von Fahrzeugreifen einer Fahrzeugflotte, die innerhalb eines vorgegebenen Zeitintervalls liegen, zu einem gemeinsamen Messzeitpunkt zusammengefasst. Auf diese Weise können beispielsweise Messzeitpunkte, die innerhalb derselben ein oder zwei Kalenderwochen liegen, zu einem Messzeitpunkt zusammengefasst werden, was zusätzlich Zeit und Kosten spart.

Gemäß einem Aspekt der Erfindung wird ein Computerprogramprodukt angegeben, umfassend Befehle, die bei der Ausführung durch einen Computer diesen veranlassen, das beschriebene Verfahren durchzuführen. Ferner wird ein computerlesbares Medium angegeben, umfassend Befehle, die bei der Ausführung durch einen Computer diesen veranlassen, das beschriebene Verfahren durchzuführen.

Gemäß einem weiteren Aspekt der Erfindung wird eine Vorrichtung zur Überwachung der Profiltiefe eines Fahrzeugreifens angegeben, die eine Recheneinheit umfasst, die geeignet ist zur Durchführung des beschriebenen Verfahrens. Ferner umfasst die Vorrichtung zumindest eine Prüfvorrichtung zur Messung einer Profiltiefe eines Fahrzeugreifens.

Die Vorrichtung hat den Vorteil, dass sie ohne zusätzlichen Hardwareaufwand eine besonders bedarfsgerechte und damit zeit- und kostensparende Überwachung von Reifenprofilen eines Fahrzeugs bzw. einer Fahrzeugflotte erlaubt.

Gemäß einer Ausführungsform umfasst die Recheneinheit zumindest eine Datenbank zur Speicherung und Verwaltung der Ergebnisse von Messungen der Profiltiefe sowie gegebenenfalls weiterer fahrzeugbezogener Daten sowie eine Plattform zur Ausführung von Modellrechnungen zum Bestimmen zumindest eines optimalen Messzeitpunktes für die Profiltiefe.

Die am Fahrzeugreifen gemessenen Profiltiefen können insbesondere unmittelbar in die Datenbank übertragen werden.

Bei der Recheneinheit muss es sich nicht um einen als bauliche Einheit ausgebildeten Computer handeln. Insbesondere kann ein Netzwerk vorgesehen sein, auf das verschiedene Endgeräte zugreifen.

Ausführungsformen der Erfindung werden im Folgenden anhand schematischer Zeichnungen beispielhaft beschrieben.
Figur 1 zeigt schematisch einen Ablauf eines Verfahrens zur Überwachung der Profiltiefe zumindest eines Fahrzeugreifens gemäß einer Ausführungsform der Erfindung;
Figur 2 zeigt schematisch eine Vorrichtung zur Überwachung der Profiltiefe eines Fahrzeugreifens gemäß einer Ausführungsform der Erfindung und
Figur 3 zeigt die Darstellung einer Überlebensfunktion.

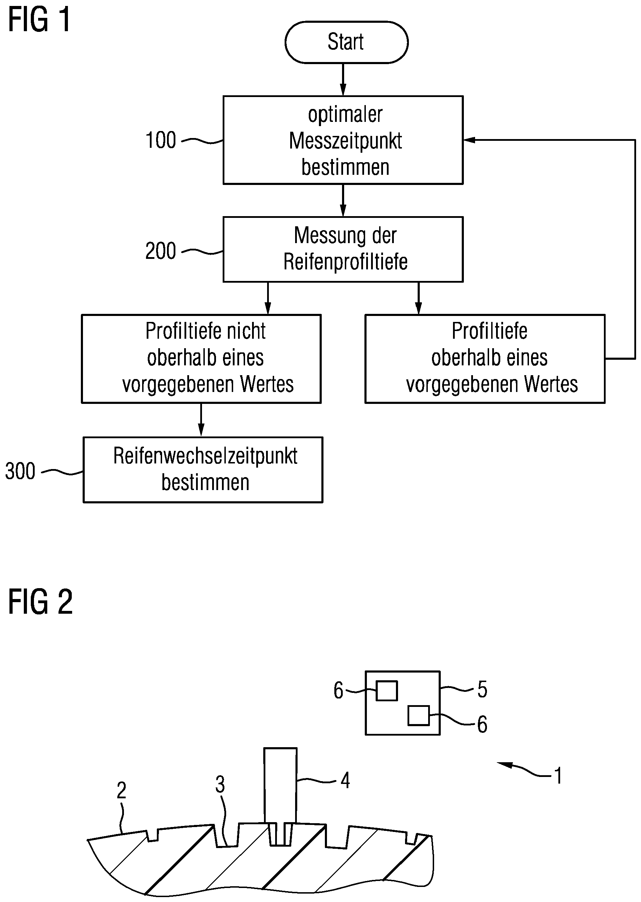

Figur 1 zeigt schematisch Schritte eines Verfahrens zur Überwachung der Profiltiefe zumindest eines Fahrzeugreifens gemäß einer Ausführungsform der Erfindung. Bei der gezeigten Ausführungsform wird nach dem Start des Verfahrens in einem Schritt 100 ein optimaler Messzeitpunkt für die Messung der Profiltiefe bestimmt. Dies erfolgt mittels einer Modellrechnung, die beispielsweise reifenspezifische Daten wie Reifenmarke, Typ, Größe, Position am Fahrzeug einbezieht und zudem fahrzeug- und flottenspezifische Merkmale wie den Einsatzort, die Art der Verwendung, die Art der Flotte, den Fahrzeugtyp. Ferner liegen dem Modell historische Profiltiefenmessdaten und gegebenenfalls weitere Erfahrungswerte bei Flotten zu Grunde.

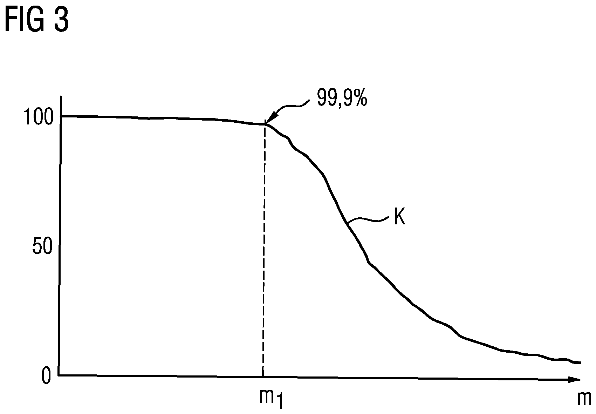

Bei dem verwendeten Modell kann es sich insbesondere um ein analytisches Modell, beispielsweise ein Überlebensmodell oder ein künstliches neuronales Netz handeln. Ein derartiges Modell liefert eine Überlebensfunktion, deren Verlauf anhand der Kurve K in Figur 3 gezeigt ist. Die Überlebensfunktion gibt normalerweise die Überlebenswahrscheinlichkeit eines Individuums zu einem Zeitpunkt an. In der vorliegenden Ausführungsform gibt die Überlebensfunktion an, mit welcher Wahrscheinlichkeit ein Fahrzeugreifen mit einer vorgegebenen Laufleistung m noch verkehrssicher ist. Anstelle der Laufleistung m könnte auch eine Zeit verwendet werden.

Als optimaler Messzeitpunkt, der im Schritt 100 bestimmt wird, kann beispielsweise der Zeitpunkt bzw. die Laufleistung angesehen werden, zudem der betrachtete Fahrzeugreifen mit einer Wahrscheinlichkeit von 99,9 % noch verkehrssicher ist. Diese Laufleistung ist in Figur 3 mit m1 gekennzeichnet.

Zum optimalen Messzeitpunkt m1 erfolgt dann im Schritt 200 die Messung der Reifenprofiltiefe. Diese kann insbesondere manuell erfolgen.

Falls die Reifenprofiltiefe nicht oberhalb eines vorgegebenen Wertes liegt, wird ein Reifenwechsel als erforderlich angesehen und in einem Schritt 300 ein Reifenwechselzeitpunkt bestimmt.

Liegt die Profiltiefe noch oberhalb des vorgegebenen Wertes, ist noch kein Reifenwechsel erforderlich. In diesem Fall werden die Verfahrensschritte 100, 200 so lange wiederholt, bis die Profiltiefe nicht mehr oberhalb des vorgegebenen Wertes liegt und ein Reifenwechsel erforderlich wird.

Figur 2 zeigt schematisch eine Vorrichtung 1 zur Überwachung der Profiltiefe eines Fahrzeugreifens 2. Dabei ist in Figur 2 ein Querschnitt durch den Fahrzeugreifen 2 mit dem Reifenprofil 3 gezeigt. Die Vorrichtung 1 umfasst zumindest eine Prüfvorrichtung 4 zur Messung der Profiltiefe des Fahrzeugreifens 2.

Die Vorrichtung 1 umfasst ferner eine Recheneinheit 5, die zumindest eine Datenbank 6 zu Speicherung und Verwaltung der Ergebnisse von Messungen der Profiltiefe umfasst sowie eine Plattform 6 zur Ausführung von Modellrechnungen zum Bestimmen zumindest eines optimalen Messzeitpunktes für die Profiltiefe.

Die Prüfvorrichtung 4 kann als manuelle Vorrichtung ausgebildet sein, von der ein Ergebnis abgelesen und in eine dafür vorgesehene Datenbank eingegeben werden muss. Es ist jedoch auch denkbar, dass die Prüfvorrichtung 4 als elektronische Messvorrichtung ausgebildet ist und den Wert für die Profiltiefe des Fahrzeugreifens 2 über eine entsprechende Schnittstelle an die Recheneinheit 5 gibt.

### Bezugszeichenliste

- 1: Vorrichtung
- 3: Fahrzeugreifen
- 3: Reifenprofil
- 4: Prüfvorrichtung
- 5: Recheneinheit
- 6: Datenbank

- K: Kurve
- m1: Messzeitpunkt

- 100: Schritt
- 200: Schritt
- 300: Schritt

## Patentansprüche

1. Verfahren zur Überwachung der Profiltiefe zumindest eines Fahrzeugreifens, welches umfasst, dass mittels einer Modellrechnung ein optimaler Messzeitpunkt für die Profiltiefe bestimmt wird, wobei als optimaler Messzeitpunkt ein Zeitpunkt ausgewählt wird, an dem eine mittels des Modells berechnete Überlebenswahrscheinlichkeit des Fahrzeugreifens einen vorgegebenen Wert aufweist,
wobei dem Modell eine Überlebensfunktion zu Grunde liegt, anhand derer der Zeitpunkt bzw. die Laufleistung ermittelt werden kann, zu dem die Überlebenswahrscheinlichkeit des Fahrzeugreifens den vorgegebenen Wert aufweist und
wobei die Überlebensfunktion angibt, mit welcher Wahrscheinlichkeit ein Fahrzeugreifen zu einem vorgegebenen Zeitpunkt oder mit einer vorgegebenen Laufleistung noch verkehrssicher ist.

2. Verfahren nach Anspruch 1, wobei nach einem Ermitteln der Profiltiefe des Fahrzeugreifens am optimalen Messzeitpunkt ein weiterer optimaler Messzeitpunkt ermittelt wird, falls die Profiltiefe einen vorgegebenen Wert nicht unterschreitet.

3. Verfahren nach Anspruch 1 oder 2, wobei nach einem Ermitteln der Profiltiefe des Fahrzeugreifens am optimalen Messzeitpunkt ein Reifenwechselzeitpunkt ermittelt wird, falls die Profiltiefe einen vorgegebenen Wert unterschreitet.

4. Verfahren nach einem der Ansprüche 1 bis 3, wobei Messungen der Profiltiefe jeweils für alle Reifen eines Fahrzeugs zum gleichen Zeitpunkt erfolgen.

5. Verfahren nach Anspruch 4, wobei als tatsächlicher Messzeitpunkt der früheste Zeitpunkt, der als optimaler Messzeitpunkt für einen der Reifen eines Fahrzeugs ermittelt wurde, verwendet wird.

6. Verfahren nach einem der Ansprüche 1 bis 5, wobei ermittelte optimale Messzeitpunkte von Fahrzeugreifen einer Fahrzeugflotte, die innerhalb eines vorgegebenen Zeitintervalls liegen, zu einem gemeinsamen Messzeitpunkt zusammengefasst werden.

7. Verfahren nach einem der Ansprüche 1 bis 6, wobei zum Schätzen der Überlebenswahrscheinlichkeit ein Kaplan-Meier-Schätzer verwendet wird.

8. Verfahren nach einem der Ansprüche 1 bis 7, wobei als Modell zur Berechnung der Überlebenswahrscheinlichkeit ein künstliches neuronales Netz verwendet wird.

9. Computerprogrammprodukt, umfassend Befehle, die bei der Ausführung durch einen Computer diesen veranlassen, das Verfahren gemäß einem der Ansprüche 1 bis 8 durchzuführen.

10. Computerlesbares Medium, umfassend Befehle, die bei der Ausführung durch einen Computer diesen veranlassen, das Verfahren gemäß einem der Ansprüche 1 bis 8 durchzuführen.

11. Vorrichtung zur Überwachung der Profiltiefe eines Fahrzeugreifens, umfassend
- eine Recheneinheit, die geeignet ist zur Durchführung des Verfahrens gemäß einem der Ansprüche 1 bis 8 sowie
- zumindest eine Prüfvorrichtung zur Messung einer Profiltiefe eines Fahrzeugreifens.

12. Vorrichtung nach Anspruch 11, wobei die Recheneinheit zumindest
- eine Datenbank zur Speicherung und Verwaltung der Ergebnisse von Messungen der Profiltiefe sowie
- eine Plattform zur Ausführung von Modellrechnungen zum Bestimmen zumindest eines optimalen Messzeitpunktes für die Profiltiefe
umfasst.

## Claims

1. Method for monitoring the tread depth of at least one vehicle tyre, which method comprises using a model calculation to determine an optimum measurement time for the tread depth, the optimum measurement time selected being a time at which a likelihood of survival of the vehicle tyre calculated by means of the model has a specified value,
wherein the model is based on a survival function that can be used to ascertain the time or mileage at which the likelihood of survival of the vehicle tyre has the specified value, and
wherein the survival function indicates the likelihood of a vehicle tyre still being roadworthy at a specified time or with a specified mileage.

2. Method according to Claim 1, wherein, after an ascertainment of the tread depth of the vehicle tyre at the optimum measurement time, a further optimum measurement time is ascertained if the tread depth is not below a specified value.

3. Method according to Claim 1 or 2, wherein, after an ascertainment of the tread depth of the vehicle tyre at the optimum measurement time, a tyre change time is ascertained if the tread depth is below a specified value.

4. Method according to one of Claims 1 to 3, wherein measurements of the tread depth are performed for all of the tyres of a vehicle at the same time.

5. Method according to Claim 4, wherein the actual measurement time used is the earliest time ascertained as the optimum measurement time for one of the tyres of a vehicle.

6. Method according to one of Claims 1 to 5, wherein ascertained optimum measurement times for vehicle tyres in a vehicle fleet that are within a specified time interval are combined to form a common measurement time.

7. Method according to one of Claims 1 to 6, wherein the likelihood of survival is estimated using a Kaplan-Meier estimator.

8. Method according to one of Claims 1 to 7, wherein the model used to calculate the likelihood of survival is an artificial neural network.

9. Computer program product comprising instructions that, when executed by a computer, cause said computer to carry out the method according to one of Claims 1 to 8.

10. Computer-readable medium comprising instructions that, when executed by a computer, cause said computer to carry out the method according to one of Claims 1 to 8.

11. Device for monitoring the tread depth of a vehicle tyre, comprising
- a computing unit suitable for carrying out the method according to one of Claims 1 to 8 and
- at least one checking device for measuring a tread depth of a vehicle tyre.

12. Device according to Claim 11, wherein the computing unit comprises at least
- a database for storing and managing the results of measurements of the tread depth and
- a platform for performing model calculations for determining at least one optimum measurement time for the tread depth.

## Revendications

1. Procédé de surveillance de la profondeur de profil d'au moins un pneu de véhicule, lequel comprend la spécification, au moyen d'un calcul de modèle, d'un instant de mesure optimal pour la profondeur de profil, l'instant de mesure optimal choisi étant un instant auquel une probabilité de survie du pneu de véhicule, calculée au moyen du modèle, présente une valeur prédéfinie,
le modèle se basant sur une fonction de survie à l'aide de laquelle peut être déterminé l'instant ou le kilométrage auquel la probabilité de survie du pneu de véhicule présente la valeur prédéfinie et
la fonction de survie indiquant la probabilité avec laquelle un pneu de véhicule est encore sûr pour la circulation à un instant prédéfini ou avec un kilométrage prédéfini.

2. Procédé selon la revendication 1, un instant de mesure optimal supplémentaire étant déterminé après une détermination de la profondeur de profil du pneu de véhicule à l'instant de mesure optimal dans le cas où la profondeur de profil n'est pas devenue inférieure à une valeur prédéfinie.

3. Procédé selon la revendication 1 ou 2, un instant de changement de pneu étant déterminé après une détermination de la profondeur de profil du pneu de véhicule à l'instant de mesure optimal dans le cas où la profondeur de profil est devenue inférieure à une valeur prédéfinie.

4. Procédé selon l'une des revendications 1 à 3, les mesures de la profondeur de profil étant effectuées respectivement au même instant pour tous les pneus d'un véhicule.

5. Procédé selon la revendication 4, l'instant de mesure réel utilisé étant l'instant le plus tôt qui a été déterminé comme instant de mesure optimal pour l'un des pneus d'un véhicule.

6. Procédé selon l'une des revendications 1 à 5, les instants de mesure optimaux déterminés de pneus de véhicules d'une flotte de véhicules, qui se situent à l'intérieur d'un intervalle de temps prédéfini, étant regroupés en un instant de mesure commun.

7. Procédé selon l'une des revendications 1 à 6, un estimateur de Kaplan-Meier étant utilisé pour estimer la probabilité de survie.

8. Procédé selon l'une des revendications 1 à 7, un réseau neuronal artificiel étant utilisé comme modèle pour le calcul de la probabilité de survie.

9. Produit de programme informatique, comprenant des instructions qui, lors de l'exécution par un ordinateur, amènent celui-ci à mettre en oeuvre le procédé selon l'une des revendications 1 à 8.

10. Support lisible par ordinateur, comprenant des instructions qui, lors de l'exécution par un ordinateur, amènent celui-ci à mettre en oeuvre le procédé selon l'une des revendications 1 à 8.

11. Dispositif de surveillance de la profondeur de profil d'un pneu de véhicule, comprenant
- une unité de calcul, qui est apte à mettre en oeuvre le procédé selon l'une des revendications 1 à 8, et
- au moins un dispositif de contrôle destiné à mesurer la profondeur de profil d'un pneu de véhicule.

12. Dispositif selon la revendication 11, l'unité de calcul comprenant au moins
- une base de données destinée à enregistrer et gérer les résultats des mesures de la profondeur de profil, et
- une plate-forme destinée à effectuer des calculs de modèle en vue de spécifier au moins un instant de mesure optimal pour la profondeur de profil.
